Europäisches Patentamt

European Patent Office

Office européen des brevets

(19)

(11) **EP 1 163 462 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **00909336.0**

(22) Anmeldetag: **08.03.2000**

(51) Int Cl.7: **F16H 61/02**

(86) Internationale Anmeldenummer:
**PCT/EP00/01985**

(87) Internationale Veröffentlichungsnummer:
**WO 00/055526 (21.09.2000 Gazette 2000/38)**

(54) **VERFAHREN ZUR STEUERUNG EINES AUTOMATIKGETRIEBES MIT ERMITTLUNG EINES QUERBESCHLEUNIGUNGSWERTES**

METHOD FOR CONTROLLING AN AUTOMATIC GEARBOX INVOLVING DETERMINATION OF A TRANSVERSE ACCELERATION VALUE

PROCEDE DE COMMANDE D'UNE BOITE DE VITESSES AUTOMATIQUE AVEC DETERMINATION D'UNE VALEUR D'ACCELERATION TRANSVERSALE

(84) Benannte Vertragsstaaten:
**DE FR**

(30) Priorität: **13.03.1999 DE 19911301**

(43) Veröffentlichungstag der Anmeldung:
**19.12.2001 Patentblatt 2001/51**

(73) Patentinhaber: **ZF FRIEDRICHSHAFEN Aktiengesellschaft**
**88038 Friedrichshafen (DE)**

(72) Erfinder:
• **HENNEKEN, Markus**
  **D-88079 Kressbronn (DE)**
• **JAUCH, Friedemann**
  **D-88074 Meckenbeuren (DE)**
• **HERBSTER, Kai-Uwe**
  **D-88046 Friedrichshafen (DE)**
• **SCHULER, Franz-Josef**
  **D-88079 Kressbronn (DE)**
• **MAUZ, Thomas**
  **D-88079 Kressbronn (DE)**

(56) Entgegenhaltungen:
**EP-A- 0 293 561       DE-A- 19 618 805**
**US-A- 5 172 318**

• **WELTER A: "DIE ADAPTIVE GETRIEBESTEUERUNG FUER DIE AUTOMATIKGETRIEBE DER BMW FAHRZEUGE MIT ZWOELFZYLINDERMOTOR" ATZ AUTOMOBILTECHNISCHE ZEITSCHRIFT,DE,FRANCKH'SCHE VERLAGSHANDLUNG. STUTTGART, Bd. 94, Nr. 9, 1. September 1992 (1992-09-01), Seiten 428-430,432,43, XP000297447 ISSN: 0001-2785 in der Anmeldung erwähnt**

EP 1 163 462 B1

## Beschreibung

Die Erfindung betrifft ein Verfahren zur Steuerung eines Automatgetriebes eines Kraftfahrzeuges, wobei eine Elektronische Getriebesteuerung mittels Raddrehzahlen proportionalen Signalen einen Querbeschleunigungswert zur Ausgabe an weitere Programmodule ermittelt.

Moderne Automatgetriebe in Kraftfahrzeugen werden von einer Elektronischen Getriebesteuerung (EGS) angesteuert, welche zur selbsttätigen Auswahl eines abgelegten Schaltprogrammes, welches z.B. eine aus der Veröffentlichung "ATZ Automobiltechnische Zeitschrift" 94 (1992) bekannte Fahrertyp-Erkennung, eine Umwelterkennung, eine Fahrsituationserkennung oder eine Erkennung eines manuellen Eingriffs beschreibt, und zur situationsabhängigen Gangwahl mit weiteren Steuergeräten und Rechnern verschiedener Aggregate kommuniziert.

Eine wichtige Größe für eine an die jeweilige Betriebssituation angepaßte Ansteuerung des Automatgetriebes stellt der Querbeschleunigungswert dar, welcher in der Elektronischen Getriebesteuerung errechnet wird.

In der "ATZ Automobiltechnische Zeitschrift" 94 (1992), Seite 434 f, wird eine Kurven-Erkennung beschrieben, wobei ab einer definierten Querbeschleunigung Hochschaltungen und ab einer weiteren höheren Querbeschleunigung auch Rückschaltungen vermieden werden.

Um die Kurven-Erkennung ohne einen teuren Beschleunigungssensor durchführen zu können, wird der aktuelle Querbeschleunigungswert über einen Algorithmus berechnet. Dabei wird die Querbeschleunigung durch Ermittlung der Drehzahlunterschiede zwischen dem nicht angetriebenen kurveninnerem und -äußerem Rad unter Berücksichtigung der Fahrgeschwindigkeit abgeschätzt.

Voraussetzung für die Durchführung des Verfahrens sind jedoch identische Abrollumfänge der Räder. Diese Bedingung wird bei dem bekannten Verfahren ständig überwacht, wobei die Kurven-Erkennung deaktiviert wird, wenn erkannt wird, daß die Räder unterschiedliche Abrollumfänge aufweisen.

Da die Reifendurchmesser der Räder und damit die Raddrehzahlen in der Praxis häufig aufgrund unterschiedlich starker Luftbefüllung oder wegen unterschiedlichen Profilabriebs voneinander abweichen, entspricht der berechnete Querbeschleunigungswert nicht der Realität, was eine falsche Gangwahl zur Folge haben kann.

Weitere bekannte Verfahren mit einer Berechnung des Querbeschleunigungswertes sind z.B. die Erkennung einer Kurvenfahrt gemäß der DE 39 22 040 oder die Bewertung einer Kurvenfahrt gemäß der DE 196 18 805 A1.

Aus der EP 0 694 138 B1, der DE 196 18 804 A1 und der DE 196 18 805 A1 sind weitere Verfahren zur Steuerung des Automatgetriebes mit Verwendung der Querbeschleunigung bekannt, bei denen die Reifendurchmesser zur Berechnung der Querbeschleunigung stets eine entscheidende Rolle spielen.

In Fällen abweichender Reifendurchmesser und folglich unterschiedlicher Raddrehzahlen sind diese Verfahren sämtlich fehlerbehaftet. In kritischen Fahrsituationen kann dies nicht nur zu einer Minderung des Fahrkomforts, sondern auch zu einer Gefahrensituation führen.

US 5 172 318 zeigt die Merkmale des Oberbegriffes des Anspruchs 1.

Der vorliegenden Erfindung liegt die Aufgabe zugrunde, ein Verfahren zur Steuerung eines Automatgetriebes eines Kraftfahrzeuges zur Verfügung zu stellen, bei dem eine Elektronische Getriebesteuerung mittels Raddrehzahlen proportionalen Signalen einen Querbeschleunigungswert zur Ausgabe an weitere Programmodule ermittelt, wobei der Querbeschleunigungswert auch bei unterschiedlichen Geometrien und Drehzahlen der einzelnen Räder hinreichend genau ist.

Erfindungsgemäß wird diese Aufgabe mit einem Verfahren nach dem Patentanspruch 1 gelöst.

Das erfindungsgemäße Verfahren bietet den Vorteil, daß der für zahlreiche Module der Elektronischen Getriebesteuerung erforderliche Querbeschleunigungswert mit hoher Genauigkeit und dennoch auf einfache Weise über die Raddrehzahlen berechnet werden kann.

Mit dem erfindungsgemäßen Verfahren werden Abweichungen von der optimalen Reifengeometrie, welche sich z.B. aus unterschiedlichem Reifendruck, unterschiedlichem Reifenprofil oder unterschiedlichen Reifentypen ergeben, korrigiert, so daß eine Verfälschung des Querbeschleunigungswertes, in dessen Berechnung die Raddrehzahlen eingehen, vermieden wird.

Ein genauer Querbeschleunigungswert aufgrund des erfindungsgemäßen Rädertoleranzabgleiches, durch den die Raddrehzahltoleranz erkannt und kompensiert wird, verhindert wiederum eine verfälschte Bewertung der Fahrsituation und trägt zu einer präzisen Getriebeabstimmung mit einer situationsgerechten, an die Umgebung und an den Fahrertyp angepaßten Schaltstrategie bei.

In einer vorteilhaften Ausführung des erfindungsgemäßen Verfahrens kann es vorgesehen sein, daß aus den Raddrehzahlen eine normierte Raddrehzahldifferenz NNDO ermittelt wird, die nach Korrektur um den Wert einer langzeitgefilterten normierten Raddrehzahldifferenz NNDF als korrigierte normierte Raddrehzahldifferenz NND in einer Funktion zur Berechnung des Querbeschleunigungswertes verarbeitet wird.

Eine hohe Genauigkeit des erfindungsgemäßen Verfahrens wird insbesondere erzielt, wenn die normierte Raddrehzahldifferenz NNDO aus einem Quotienten aus einer Raddrehzahldifferenz geteilt durch die mittlere Raddrehzahl bezogen auf die nicht angetriebenen Fahrzeugräder gebildet wird, und die langzeitgefilterte normierte Raddrehzahldifferenz NNDF mittels einer Filterung der normierten Raddrehzahldifferenz NNDO über eine vordefinierte Zeit, vorzugsweise mit einem Tiefpaß erster Ordnung, ermittelt wird.

Weitere vorteilhafte Ausführungen und Anwendungen der Erfindung ergeben sicn aus den weiteren Unteransprüchen und aus dem nachfolgend anhand der Zeichnung prinzipmäßig beschriebenen Ausführungsbeispiel.

Es zeigt:

Fig. 1     eine schematisierte Darstellung eines Verfahrensabiaufes zur Ermittlung eines Querbeschleunigungswertes in einer Steuerung eines Automatgetriebes eines Kraftfahrzeuges; und

Fig. 2     eine schematisierte Darstellung eines Verfahrensablaufes zur Ermittlung einer langzeitgefilterten normierten Raddrehzahldifferenz, welche in das Verfahren gemäß Fig. 1 eingeht.

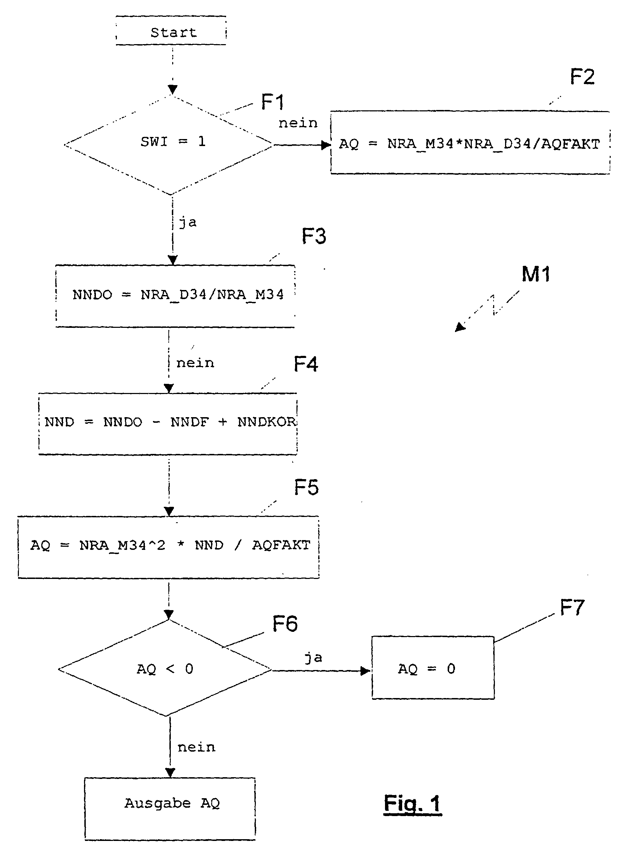

Bezug nehmend auf Fig. 1 ist äußerst schematisch ein Verfahrensablauf in einem Programmodul M1 eines Verfahren zur Steuerung eines Automatgetriebes eines Kraftfahrzeuges dargestellt, bei dem eine Elektronische Getriebesteuerung mittels Signalen, welche Raddrehzahlen NRA3, NRA4 proportional sind, einen Querbeschleunigungswert AQ ermittelt, welcher an weitere Programmodule ausgegeben wird.

In dem Programmodul M1, welches ein Rädertoleranzabgleich-Modul darstellt, werden zur Ermittlung des Querbeschleunigungswertes AQ die in die Berechnung eingehenden, gemessenen Raddrehzahlen NRA3, NRA4 von Fahrzeugrädern über eine Langzeitadaption derart korrigiert, daß unterschiedliche dynamische Reifenradien RDYN, welche von einer optimalen Reifengeometrie abweichen, kompensiert werden.

Als dynamische Reifenradius RDYN wird dabei der Reifenradius für ein schlupffrei rollendes Rad während der Fahrt unter Berücksichtigung der Beladung des Fahrzeuges und der Temperatur betrachtet.

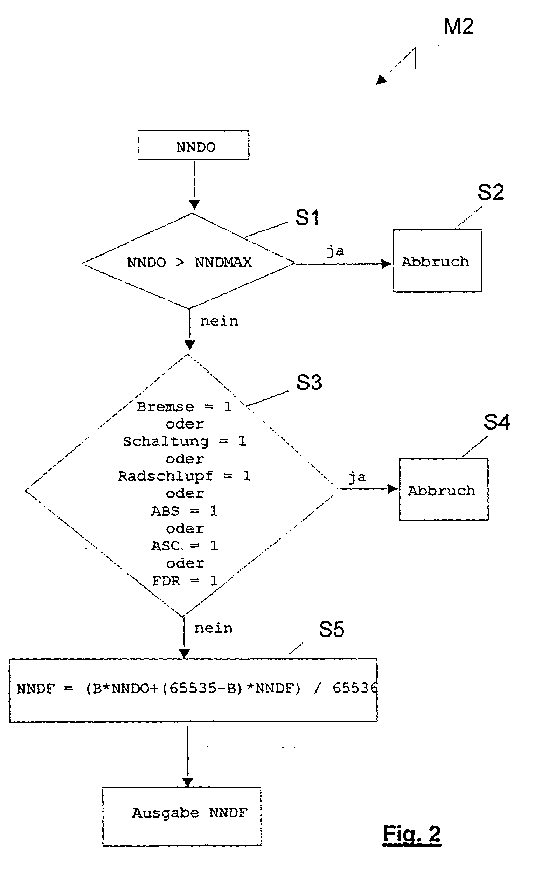

Zur Berechnung des Querbeschleunigungswertes AQ wird aus den Raddrehzahlen NRA3, NRA4 eine normierte Raddrehzahldifferenz NNDO ermittelt, welche in einem in Fig. 2 dargestellten Verfahren langzeitgefiltert wird. Durch Subtraktion der langzeitgefilterten normierten Raddrehzahldifferenz NNDF von der aktuellen normierten Raddrehzahldifferenz NNDO erhält man eine korrigierte normierte Raddrehzahldifferenz NND, welche in einer Funktion F5 zur Berechnung des Querbeschleunigungswertes AQ verarbeitet wird.

Grundlegend für die Berechnung sind somit die Raddrehzahlen NRA3 und NRA4, wobei hier die Raddrehzahl NRA3 einem linken hinteren Rad und die Raddrehzahl NRA4 einem rechten hinteren Rad zugeordnet ist. Die zur Berechnung herangezogenen Raddrehzahlen NRA3 und NRA4 sind die Raddrehzahlen der nicht angetriebenen Räder, da diese angesichts eines möglichen Antriebsschlupfes bei angetriebenen Rädern eine größere Genauigkeit gewährleisten.

Aus den gemessenen Raddrehzahlen NRA3, NRA4 wird zunächst eine mittlere Raddrehzahl NRA_M34 gemäß folgender Funktion gebildet:

$$NRA\_M34=(NRA3+NRA4)/2$$

Der Rädertoleranzabgleich wird nur in einem bestimmten Geschwindigkeitsbereich durchgeführt, da Raddrehzahlsensoren nur in einem bestimmten Geschwindigkeitsbereich bzw. Raddrehzahlbereich ausreichend genaue Signale liefern. Falls die mittlere Raddrehzahl NRA_M34 einen unteren Schwellwert NRAMIN unterschreitet oder einen oberen Schwellwert NRAMAX überschreitet, wird der Querbeschleunigungswert AQ unabhängig davon, ob der Rädertoleranzabgleich aktiviert ist oder nicht stets zu Null gesetzt.

Des weiteren wird aus den Raddrehzahlen eine Raddrehzahldifferenz NRA_D34 nach folgender Funktion errechnet:

$$NRA\_D34= |NRA3\text{-}NRA4|$$

Wie in Fig. 1 ersichtlich ist, wird zu Beginn des Rädertoleranzabgleich-Moduls M1 in einer Unterscheidungsfunktion F1 als Startkriterium geprüft, ob ein Applikationsschalter SWI zum Rädertoleranzabgleich aktiviert ist.

Wenn die elektronische Getriebesteuerung eine Variablenbesetzung "SWI=0" und damit eine Deaktivierung des Rädertoleranzabgleiches erkennt, wird der Querbeschleunigungswert AQ in einer Verarbeitungsfunktion F2 gemäß nachfolgender Funktion berechnet:

$$AQ \{m/s^2\} = (NRA\_M34 * NRA\_D34) / AQFAKT$$

Darin steht die Größe AQFAKT für einen Faktor zur Berechnung der Querbeschleunigung in einer Kurve, der gemäß der Funktion

$$AQFAKT = SB \{m\} * 3600 / (4*Pi^2*RDYN^2 \{m^2\})$$

ermittelt wird, mit einer Spurbreite SB, welche den Abstand zwischen dem linken und rechten Rad wiedergibt, und "RDYN" als dynamischer Reifenradius.

Wenn in der Unterscheidungsfunktion F1 ein Zustand "SWI=1" erkannt wird, d.h. daß der Softwareschalter SWI zum Rädertoleranzabgleich eingeschaltet ist, wird in einer nachfolgenden Funktion F3 die normierte Raddrehzahldifferenz NNDO berechnet. Diese ergibt sich unabhängig von der Geschwindigkeit des Fahrzeugs aus einem Quotienten aus der mittleren Raddrehzahl NRA_M34 und der Raddrehzahldifferenz NRA_D34 wie folgt:

$$NNDO = NRA\_D34 / NRA\_M34$$

In einer Funktion F4 wird die korrigierte normierte Raddrehzahldifferenz NND durch Subtraktion der langzeitgefilterten normierten Raddrehzahldifferenz NNDF, deren Berechnung unter Bezugnahme auf Fig. 2 beschrieben ist, von der aktuellen normierten Raddrehzahldifferenz NNDO ermittelt.

Bei der in Fig. 1 dargestellten Ausführung wird zu der Differenz aus aktueller normierter Raddrehzahldifferenz NNDO minus langzeitgefilterter normierter Raddrehzahldifferenz NNDF ein applizierbarer Korrekturwert NNDKOR addiert, um nachträglich dem Applikateur eine weitere Korrekturmöglichkeit zu bieten.

Die korrigierte normierte Raddrehzahldifferenz NND ergibt sich somit gemäß der Gleichung:

$$NND = NNDO - NNDF + NNDKOR$$

Mit der korrigierten normierten Raddrehzahldifferenz NND, der mittleren Raddrehzahl NRA_M34 und dem Faktor AQFAKT wird schließlich der Querbeschleunigungswert AQ in einer Funktion F5 gemäß der Gleichung

$$AQ [m/s^2] = NRA\_M34 * NRA\_M34 * NND / AQFAKT$$

berechnet, wobei der Faktor AQFAKT hier genauso ermittelt wird wie zuvor unter Bezugnahme auf den deaktivierten Rädertoleranzabgleich beschrieben.

Die Fig. 2 zeigt ein Modul M2 zur Berechnung der langzeitgefilterten normierten Raddrehzahldifferenz NNDF, welche durch Filterung der normierten Raddrehzahldifferenz NNDO ermittelt wird.

Die Filterung der normierten Raddrehzahldifferenz NNDO erfolgt mit einem Tiefpaß erster Ordnung. Dabei wird ein Wert einer normierten Raddrehzahldifferenz NNDO mehrfach gemäß der Funktion

$$NNDF = [B * NNDO + (65535 - B) * NNDF] / 65536$$

mit einer Filterzeitkonstanten B zu einer gefilterten normierten Raddrehzahldifferenz NNDF geglättet.

Die Filterzeitkonstante B und eine Zeitdifferenz zwischen den Berechnungsprozessen (Task) bestimmen die zeitliche Länge der Filterung der gefilterten normierten Raddrehzahldifferenz NNDF.

Als Bedingung für die Filterung wird in einer ersten Funktion S1 geprüft, ob die normierten Raddrehzahldifferenz NNDO einen maximalen Grenzwert NNDMAX nicht überschreitet. Falls NNDMAX überschritten wird, wird zu einer Abbruchfunktion S2 verzweigt und die Filterung unterbleibt.

Außer der Bedingung der Funktion S1 werden im vorliegenden Ausführungsbeispiel weitere wichtige Bedingungen für die Filterung hinzugefügt.

So darf kein Bremse betätigt sein, um eine Ergebnisverfälschung durch einen dabei auftretenden Schlupf zu vermeiden. Es darf auch keine Schaltung aktiv sein, da sich hierbei die Raddrehzahlen verändern können. Des weiteren darf kein Radschlupf auftreten und keine Antiblockiersystem (ABS)-Regelbremsung erkannt werden. Wegen des starken Einflusses auf die Raddrehzahlen darf auch keine Anforderung einer Antischlupf-Kontrolle (ASC) nach einem Anfahren im 2. Gang und keine Anforderung einer Hoch- oder Rückschaltverhinderung durch eine Fahrdynamikregelung (FDR) vorliegen.

Diese Bedingungen werden in der Funktion S3 ständig überwacht. Wenn eine der Bedingungen nicht mehr erfüllt ist, wird eine Funktion F4 zum Abbruch der Filterung aktiviert.

Wenn die Bedingungen der Funktionen S1 und S3 erfüllt sind, wird die gefilterte normierte Raddrehzahldifferenz NNDF in einer Funktion S5 errechnet und an das Programmodul M1 ausgegeben.

Falls diese Bedingungen nicht erfüllt sind, wird der alte, aus der vorangegangenen Berechnung ermittelte Wert der gefilterten normierten Raddrehzahldifferenz NNDF weiter verwendet.

Im Initialisierungszustand wird als Raddrehzahlkorrekturwert die gefilterte normierte Raddrehzahldifferenz NNDF aus einem nichtflüchtigen Speicher gesetzt, in dem der Wert aus der letzten Fahrt abgelegt ist.

Durch die Korrektur mit der gefilterten normierten Raddrehzahldifferenz NNDF kann der errechnete Querbeschleunigungswert AQ gegebenenfalls kleiner als Null sein. Wenn dies in einer in der Fig. 1 ersichtlichen Prüffunktion F6 festgestellt wird, wird eine Abbruchfunktion F7 gestartet, in der der Querbeschleunigungswert AQ zu Null gesetzt wird.

Im vorliegenden Ausführungsbeispiel dient der so ermittelte Querbeschleunigungswert AQ als Eingangsgröße für ein nicht näher dargestelltes Programmodul zur Erkennung einer Kurvenfahrt, wobei im Falle einer Kurvenfahrt zur Gewährleistung der Fahrstabilität eine Hochschaltverhinderung ausgelöst wird.

In diesem Programmodul wird eine Kurvenfahrt erkannt, wenn der ermittelte Querbeschleunigungswert AQ eine Kennlinie AQKURVE überschreitet, welche in Abhängigkeit von Querbeschleunigungswerten AQ und einer Fahreraktivität proportionalen Größen wie z.B. einem Bewertungszähler festgelegt ist. Bei unterschreiten der Schwelle AQKURVE gilt die Situation "Kurvenfahrt" als nicht erkannt.

Um ein Pendeln zwischen "Kurve erkannt" und "Kurve nicht erkannt" zu vermeiden, ist die Kennlinie AQKURVE hysteresebehaftet.

Wenn die Querbeschleunigung am Ende einer Kurve unter die Kennlinie AQKURVE abgesunken ist, wird in dem Programmodul zur Erkennung einer Kurvenfahrt eine Sicherheitsstrecke WEG mit einem abtriebsdrehzahlabhängigen Weg WEGKV vorbelegt. Aus der Abtriebsdrehzahl wird in jedem z.B. 30 ms dauernden Programmzyklus, für den die Fahrzeuggeschwindigkeit als konstant genähert wird, ein bereits zurückgelegter Weg INC bestimmt, der von der Sicherheitsstrecke abgezogen wird. Erst wenn die Sicherheitsstrecke zurückgelegt ist, gilt die Kurve als nicht mehr erkannt.

Sollte innerhalb der Wegstrecke der Querbeschleunigungswert AQ erneut die Schwelle AQKURVE überschreiten, dann wird wieder eine Kurvenfahrt erkannt, und die Sicherheitsstrecke WEG wird erneut mit dem abtriebsdrehzahlabhängigen Weg WEGKV vorbelegt.

Neben dieser sehr vorteilhaften Verwendung des auf zuvor beschriebene Weise ermittelten Querbeschleunigungswertes AQ kann dieser präzise Wert selbstverständlich auch in zahlreichen weiteren Programmodulen der elektronischen Getriebesteuerung Verwendung finden.

Bezeichnungen

| | |
|---|---|
| ABS | Antiblockiersystem |
| AQ | Querbeschleunigungswert |
| AQFAKT | Faktor zur Berechnung der Querbeschleunigung |
| AQKURVE | Kennlinie, fahrertypabhängige Schwelle zur Kurvenerkennung |
| ASC | Antischlupf-Kontrolle |
| B | Filterkonstante der Raddrehzahldifferenz |
| F1 | Unterscheidungsfunktion |
| F2 | Verarbeitungsfunktion, Berechnung AQ ohne Raddrehzahlabgleich |
| F3 | Verarbeitungsfunktion, Berechnung NNDO |
| F4 | Verarbeitungsfunktion, Berechnung NND |
| F5 | Verarbeitungsfunktion, Berechnung AQ mit Raddrehzahlabgleich |
| F6 | Unterscheidungsfunktion |
| F7 | Verarbeitungsfunktion |
| FDR | Fahrdynamikregelung |
| INC | x zurückgelegter Weg, Inkrement auf Sicherheitsweg |
| M1 | Programmodul, Rädertoleranzabgleich-Modul |
| M2 | Programmodul zur Berechnung von NNDF |
| NND | korrigierte normierte Raddrehzahldifferenz |
| NNDF | xlangzeitgefilterte normierte Raddrehzahldifferenz |
| NNDKOR | applizierbarer Korrekturwert |
| NNDMAX | maximale zulässige Raddrehzahldifferenz |

EP 1 163 462 B1

NNDO        normierte Raddrehzahldifferenz
NRA_D34     Raddrehzahldifferenz
NRA_M34     mittlere Raddrehzahl
NRA3        Raddrehzahl von linkem, nicht angetriebenen Fahrzeugrad
NRA4        Raddrehzahl von rechtem, nicht angetriebenen Fahrzeugrad
NRAMAX      maximale Raddrehzahl für Raddrehzahlabgleich
NRAMIN      minimale Raddrehzahl für Raddrehzahlabgleich
RDYN        dynamischer Reifenradius
S1          Unterscheidungsfunktion
S2          Verarbeitungsfunktion, Abbruchsfunktion
S3          Unterscheidungsfunktion
S4          Verarbeitungsfunktion, Abbruchsfunktion
S5          Verarbeitungsfunktion, Filterungsfunktion
SB          Spurbreite
SWI         Applikationsschalter Raddrehzahltoleranzabgleich
WEG         Sicherheitsstrecke
WEGKV       abtriebsdrehzahlabhängiger Weg, Kennlinie Sicherheitsstrecke zum Ausstieg

**Patentansprüche**

1.  Verfahren zur Steuerung eines Automatgetriebes eines Kraftfahrzeuges, wobei eine Elektronische Getriebesteuerung mittels Raddrehzahlen proportionalen Signalen einen Querbeschleunigungswert zur Ausgabe an weitere Programmodule ermittelt, wobei die in den Querbeschleunigungswert (AQ) eingehenden, ermittelten Raddrehzahlen (NRA3, NRA4) von Fahrzeugrädern in einem Rädertoleranzabgleich-Modul (M1) korrigiert werden, wenn ein dynamischer Reifenradius (RDYN) an einem der Fahrzeugräder von einem bei einer optimalen Reifengeometrie gegebenen Reifenradius abweicht, indem aus den Raddrehzahlen (NRA3, NRA4) eine normierte Raddrehzahldifferenz (NNDO) ermittelt wird, die nach Korrektur um den Wert einer langzeitgefilterten normierten Raddrehzahldifferenz (NNDF) als korrigierte normierte Raddrehzahldifferenz (NND) in einer Funktion (F5) zur Berechnung des Querbeschleunigungswertes (AQ) verarbeitet wird, **dadurch gekennzeichnet, dass** die gefilterte normierte Raddrehzahldifferenz (NNDF) im Initialisierungszustand aus einem nichtflüchtigen Speicher gesetzt wird.

2.  Verfahren nach Anspruch 1, **dadurch gekennzeichnet, daß** die normierte Raddrehzahldifferenz (NNDO) aus einem Quotienten aus einer Raddrehzahldifferenz (NRA_D34) geteilt durch eine mittlere Raddrehzahl (NRA_M34) zweier parallel gegenüberliegender Fahrzeugräder gebildet wird.

3.  Verfahren nach Anspruch 1 oder 2, **dadurch gekennzeichnet, daß** die langzeitgefilterte normierte Raddrehzahldifferenz (NNDF) mittels einer Filterung (S5) der normierten Raddrehzahldifferenz (NNDO) ermittelt wird.

4.  Verfahren nach Anspruch 3, **dadurch gekennzeichnet, daß** die Filterung (S5) der normierten Raddrehzahldifferenz (NNDO) mit einem Tiefpaß erster Ordnung durchgeführt wird.

5.  Verfahren nach Anspruch 4, **dadurch gekennzeichnet, daß** die Filterung (S5) der normierten Raddrehzahldifferenz (NNDO) gemäß der Funktion

$$NNDF = [B * NNDO + (65535 - B) * NNDF] / 65536$$

durchgeführt wird, mit "NNDF" als gefilterte normierte Raddrehzahldifferenz, "NNDO" als normierte Raddrehzahldifferenz und "B" als Filterzeitkonstante der Raddrehzahldifferenz.

6.  Verfahren nach einem der Ansprüche 3 bis 5, **dadurch gekennzeichnet, daß** die Filterung (S5) unterbleibt, wenn die gefilterte normierte Raddrehzahldifferenz (NNDF) größer als ein vordefinierter Grenzwert (NNDMAX) ist.

7.  Verfahren nach einem der Ansprüche 3 bis 5, **dadurch gekennzeichnet, daß** die Filterung (S5) unterbleibt, wenn eine Bremsbetätigung oder eine Schaltung oder ein Radschlupf oder eine Antiblockiersystem (ABS)-Regelbremsung oder eine Anforderung einer Antischlupf-Kontrolle (ASC) oder einer Fahrdynamikregelung (FDR) erkannt wird.

8. Verfahren nach einem der Ansprüche 1 bis 7, **dadurch gekennzeichnet, daß** die korrigierte normierte Raddrehzahldifferenz (NND) aus der Differenz zwischen der normierte Raddrehzahldifferenz (NNDO) minus der langzeitgefilterten normierten Raddrehzahldifferenz (NNDF) ermittelt wird.

9. Verfahren nach einem der Ansprüche 1 bis 7, **dadurch gekennzeichnet, daß** die korrigierte normierte Raddrehzahldifferenz (NND) aus der Differenz zwischen der normierte Raddrehzahldifferenz (NNDO) minus der langzeitgefilterten normierten Raddrehzahldifferenz (NNDF) plus eines applizierbaren Korrekturwertes (NNDKOR) ermittelt wird.

10. Verfahren nach einem der Ansprüche 1 bis 9, **dadurch gekennzeichnet, daß** die korrigierte normierte Raddrehzahldifferenz (NND) zur Berechnung des Querbeschleunigungswertes (AQ) in folgender Funktion verarbeitet wird:

$$AQ = NRA\_M34 * NRA\_M34 * NND / AQFAKT$$

mit "AQ" als Querbeschleunigungswert, "NRA_M34" als mittlere Raddrehzahl, "NND" als normierte Raddrehzahldifferenz und "AQFAKT" als Faktor zur Berechnung der Querbeschleunigung.

11. Verfahren nach Anspruch 10, **dadurch gekennzeichnet, daß** der Faktor zur Berechnung der Querbeschleunigung (AQFAKT) gemäß der Funktion

$$AQFAKT = SB * 3600/ (4*Pi\char`\^2*RDYN\char`\^2)$$

ermittelt wird, mit "AQFAKT" als Faktor zur Berechnung der Querbeschleunigung, "SB" als Spurbreite und "RDYN" als dynamischer Reifenradius.

12. Verfahren nach einem der Ansprüche 1 bis 11, **dadurch gekennzeichnet, daß** der Querbeschleunigungswert (AQ) zu Null gesetzt wird, wenn die mittlere Raddrehzahl (NRA_M34) außerhalb eines durch einen minimalen Grenzwert (NRAMIN) und einen maximalen Grenzwert (MRAMAX) definierten Bereiches liegt, die normierte Raddrehzahldifferenz (NNDO) größer als ein vordefinierter Maximalwert (NNDMAX) ist oder der errechnete Querbeschleunigungswert (AQ) kleiner als Null ist.

13. Verfahren nach einem der Ansprüche 1 bis 12, **dadurch gekennzeichnet, daß** als Startbedingung geprüft wird, ob ein Applikationsschalter zum Raddrehzahltoleranzabgleich aktiviert ist (SWI=1).

14. Verfahren nach einem der Ansprüche 1 bis 13, **dadurch gekennzeichnet, daß** der Querbeschleunigungswert (AQ) bei nicht aktiviertem Applikationsschalter zum Raddrehzahltoleranzabgleich (SWI=0) gemäß der Funktion

$$AQ = (NRA\_M34 * NRA\_D34) / AQFAKT$$

berechnet wird, mit "AQ" als Querbeschleunigungswert, "NRA_M34" als mittlere Raddrehzahl und "AQFAKT" als Faktor zur Berechnung der Querbeschleunigung.

15. Verfahren nach einem der Ansprüche 1 bis 14, **dadurch gekennzeichnet, daß** der dynamische Reifenradius (RDYN) für ein schlupffrei rollendes Rad während der Fahrt ermittelt wird.

16. Verfahren nach einem der Ansprüche 1 bis 15, **dadurch gekennzeichnet, daß** als Raddrehzahlen (NRA3, NRA4) die Raddrehzahlen nicht angetriebener Fahrzeugräder verwendet werden.

17. Verfahren nach einem der Ansprüche 1 bis 16, **dadurch gekennzeichnet, daß** der mit dem Rädertoleranzabgleich-Modul (M1) ermittelte Querbeschleunigungswert (AQ) als Eingangsgröße in einem Programmodul zur Erkennung einer Kurvenfahrt verwendet wird, worin eine Kurvenfahrt erkannt wird, wenn der ermittelte Querbeschleunigungswert (AQ) eine Kennlinie (AQKURVE) überschreitet, welche in Abhängigkeit von Querbeschleunigungswerten (AQ) und einer Fahreraktivität proportionalen Größen festgelegt ist.

18. Verfahren nach Anspruch 17, **dadurch gekennzeichnet, daß** die Kennlinie (AQKURVE) hysteresebehaftet ist.

**19.** Verfahren nach Anspruch 17 oder 18, **dadurch gekennzeichnet, daß** eine Sicherheitsstrecke (WEG) mit einem abtriebsdrehzahlabhängigen Weg (WEGKV) vorbelegt wird, wenn der Querbeschleunigungswert (AQ) nach Erkennung einer Kurvenfahrt die Kennlinie (AQKURVE) wieder unterschreitet, wobei eine Kurvenfahrt als nicht mehr gegeben gilt, wenn die Kennlinie (AQKURVE) innerhalb der Sicherheitsstrecke (WEG) nicht erneut überschritten wird, und die Sicherheitsstrecke (WEG) erneut mit dem abtriebsdrehzahlabhängigen Weg (WEGKV) vorbelegt wird, wenn die Kennlinie (AQKURVE) innerhalb der Sicherheitsstrecke (WEG) erneut überschritten wird.

**20.** Verfahren nach einem der Ansprüche 17 bis 19, **dadurch gekennzeichnet, daß** bei Erkennung einer Kurvenfahrt eine Hochschaltverhinderung ausgelöst wird.

**Claims**

**1.** Process for controlling an automatic gearbox in a motor vehicle involving an electronic gearbox control unit which determines a transverse acceleration value from proportional wheel speed signals which it then issues to other program modules whereby the wheel speeds (NRA3, NRA4) entering the transverse acceleration value (AQ) from vehicle wheels are corrected in a wheel tolerance balance module (M1) whenever the dynamic tyre radius (RDYN) of one wheel varies from that of another tyre radius possessing optimum tyre geometry which it does by determining from wheel speeds (NRA3 and NRA4) a standardized differential wheel speed (NNDO) which, after being corrected by the value obtained for long-term filtered and standardized differential wheel speed (NNDF) becomes the corrected and standardized differential wheel speed (NND) in a function (F5) which is used for calculating transverse acceleration value (AQ) **characterized in that** the filtered and standardized differential wheel speed (NNDF) in initialisation condition is set from a non-volatile memory unit.

**2.** Process in accordance with Claim 1, **characterized in that** the standardized differential wheel speed (NNDO) is calculated from a quotient formed by dividing differential wheel speed (NRA_D34) by mean wheel speed (NRA_M34) of two parallel vehicle wheels.

**3.** Process in accordance with Claim 1 or 2, **characterized in that** the long-term filtered differential wheel speed (NNDF) is determined by filtering the standardized differential wheel speed (NNDO).

**4.** Process in accordance with Claim 3, **characterized in that** filtering (S5) of standardized differential wheel speed (NNDO) is conducted with a first-order low-pass.

**5.** Process in accordance with Claim 4, **characterized in that** filtering (S5) of standardized differential wheel speed (NNDO) is performed in accordance with function

$$NNDF = [B * NNDO + (65535 - B) * NNDF] / 65536$$

where "NNDF" is a filtered and standardized differential wheel speed, where "NNDO" is a standardized differential wheel speed and where "B" is a filter time constant for differential wheel speed.

**6.** Process in accordance with one of Claims 3 to 5, **characterized in that** filtering (S5) is suppressed if the filtered and standardized differential wheel speed (NNDF) is greater than a predefined limit value (NNDMAX).

**7.** Process in accordance with one of Claims 3 to 5, **characterized in that** filtering (S5) is suppressed if the brakes are actuated or if a gear change or wheel slip or anti-lock braking operation (ABS)or a request for anti-slip control (ASC) or dynamic drive control (FDR) is detected.

**8.** Process in accordance with one of Claims 1 to 7, **characterized in that** the corrected and standardized differential wheel speed (NND) is determined from the difference between standardized differential wheel speed (NNDO) minus long-term filtered and standardized differential wheel speed (NNDF).

**9.** Process in accordance with one of Claims 1 to 7, **characterized in that** the corrected and standardized differential wheel speed (NND) is determined from the difference between standardized differential wheel speed (NNDO) minus long-term filtered and standardized differential wheel speed (NNDF)plus an applicable correction value (NNDKOR).

10. Process in accordance with one of Claims 1 to 9, **characterized in that** the corrected and standardized differential wheel speed (NND)is processed to calculate the transverse acceleration value (AQ) in the following function:

$$AQ = NRA\_M34 * NRA\_M34 * NND / AQFAKT$$

where "AQ" is the transverse acceleration figure, "NRA_M34" is the mean wheel speed, "NND" is the standardized differential wheel speed and where "AQFAKT" is the factor for calculating transverse acceleration.

11. Process in accordance with Claim 10, **characterized in that** the factor for calculating transverse acceleration (AQFAKT) is determined using function

$$AQFAKT = SB * 3600 / (4*Pi^2*RDYN^2)$$

where "AQFAKT" is the factor for calculating transverse acceleration, "SB" is the track width and "RDYN" is the dynamic tyre radius.

12. Process in accordance with one of Claims 1 to 11, **characterized in that** the transverse acceleration value (AQ) is set to zero whenever the mean wheel speed (NRA_M34) moves outside a range defined by a minimum limit (NRAMIN) and a maximum limit (NRAMAX), whenever the standardized differential wheel speed (NNDO) exceeds a predefined maximum value (NNDMAX) or whenever the transverse acceleration figure (AQ) is less than zero.

13. Process in accordance with one of Claims 1 to 12, **characterized in that** a start condition is checked whereby an application switch must be activated for the wheel speed tolerance balance (SWI=1).

14. Process in accordance with one of Claims 1 to 13, **characterized in that**, if the application switch is not activated for a wheel speed tolerance balance (SWI=0), the transverse acceleration value (AQ) is calculated in accordance with function

$$AQ = (NRA\_M34 * NRA\_D34) / AQFAKT$$

where "AQ" is the transverse acceleration value, "NRA_M34" is the mean wheel speed and where "AQFAKT" is a factor for calculating transverse acceleration.

15. Process in accordance with one of Claims 1 to 14, **characterized in that** the dynamic tyre radius (RDYN) for a slip-free rolling wheel is determined while the vehicle is in motion.

16. Process in accordance with one of Claims 1 to 15, **characterized in that** the wheel speeds of non-driven vehicle wheels are used to define wheel speed values (NRA3, NRA4).

17. Process in accordance with one of Claims 1 to 16, **characterized in that** the transverse acceleration value (AQ) calculated with the wheel tolerance balance module (M1) is used as an input parameter in a program module for detecting when a vehicle is cornering, whereby said cornering is detected when the defined transverse acceleration value (AQ) exceeds a characteristics curve (AQKURVE) which is defined in accordance with parameters proportional to transverse acceleration figures (AQ) and driver activity.

18. Process in accordance with Claim 17, **characterized in that** the characteristics curve (AQKURVE) is subject to hysteresis.

19. Process in accordance with Claim 17 or 18, **characterized in that** a safety distance (WEG) is assigned with a distance dependent on output speed (WEGKV) whenever the transverse acceleration value (AQ) drops back below the characteristics curve (AQKURVE) after cornering action has been detected, and renewed cornering is considered not to be taking place unless the characteristics curve (AQKURVE) is exceeded once again within the safety distance (WEG, and that the safety distance (WEG) is once again assigned an output speed dependent distance (WEGKV) whenever the characteristics curve (AQKURVE) is next exceeded within the safety distance (WEG).

**20.** Process in accordance with one of Claims 17 to 19, **characterized in that**, when cornering is detected, an upshift inhibit is activated.

**Revendications**

**1.** Procédé de commande d'une boîte de vitesses automatique d'un véhicule automobile dans lequel une commande électronique de la boîte de vitesses calcule, au moyen de signaux proportionnels à des vitesses de rotation de roues, une valeur de l'accélération transversale destinée à être transmise à d'autres modules du programme, dans lequel les vitesses de rotation (NRA3, NRA4) de roues du véhicule obtenues, entrant dans la valeur de l'accélération transversale (AQ), sont corrigées dans un module (M1) de compensation des tolérances sur les roues, lorsqu'un rayon dynamique de pneumatique (RDYN) sur l'une des roues du véhicule s'écarte d'un rayon de pneumatique existant dans une géométrie optimale du pneumatique, par le fait que, à partir des vitesses de rotation des roues (NRA3, NRA4), on calcule une différence des vitesses de rotation des roues normée (NNDO) qui est traitée, après avoir été corrigée de la valeur d'une différence des vitesses de rotation des roues normée, filtrée sur un temps long (NNDF), en qualité de différence des vitesses de rotation des roues normée corrigée (NND) dans une fonction (F5) pour le calcul de la valeur de l'accélération transversale (AQ), **caractérisé en ce que** la différence des vitesses de rotation des roues normée, filtrée (NNDF) est mise à l'état d'initialisation pris dans une mémoire non volatile.

**2.** Procédé selon la revendication 1, **caractérisé en ce que** la différence des vitesses de rotation de roues normée (NNDO) est formée par un quotient d'une différence des vitesses de rotation des roues (NRA_D34) par une vitesse de rotation moyenne (NRA_M34) de deux roues du véhicule opposées parallèlement.

**3.** Procédé selon la revendication 1 ou 2, **caractérisé en ce que** la différence des vitesses de rotation des roues normée, filtrée sur un temps long (NNDF) est obtenue au moyen d'un filtrage (S5) de la différence des vitesses de rotation des roues normée (NNDO).

**4.** Procédé selon la revendication 3, **caractérisé en ce que** le filtrage (S5) de la différence des vitesses de rotation des roues normée (NNDO) est exécuté avec un filtre passe-bas du premier ordre.

**5.** Procédé selon la revendication 4, **caractérisé en ce que** le filtrage (S5) de la différence des vitesses de rotation des roues normée (NNDO) est exécuté selon la fonction

$$NNDF = [B * NNDO + (65535 - B) * NNDF] / 65536$$

où "NNDF" représente la différence des vitesses de rotation des roues normée filtrée, "NNDO" représente la différence des vitesses de rotation des roues normée et "B" représente une constante de temps de filtre de la différence des vitesses de rotation des roues.

**6.** Procédé selon l'une des revendications 3 à 5, **caractérisé en ce que** le filtrage (S5) est supprimé lorsque la différence des vitesses de rotation des roues normée filtrée (NNDF) est supérieure à une valeur limite préalablement définie (NNDMAX).

**7.** Procédé selon l'une des revendications 3 à 5, **caractérisé en ce que** le filtrage (S5) est supprimé lorsqu'un actionnement des freins ou une commutation, ou un patinage des roues ou un freinage régulé-système antiblocage (ABS), ou une demande de contrôle de l'antipatinage (ASC) ou une régulation de dynamique de la conduite (FDR) est détectée.

**8.** Procédé selon l'une des revendications 1 à 7, **caractérisé en ce que** la différence des vitesses de rotation des roues corrigée normée (NND) est obtenue à partir de la différence entre la différence des vitesses de rotation des roues normée (NNDO) moins la différence des vitesses de rotation des roues normée filtrée sur un temps long (NNDF).

**9.** Procédé selon l'une des revendications 1 à 7, **caractérisé en ce que** la différence des vitesses de rotation des roues corrigée normée (NND) est obtenue à partir de la différence entre la différence des vitesses de rotation des roues normée (NNDO) moins la différence des vitesses de rotation des roues normée filtrée sur un temps long (NNDF) plus une valeur de correction applicable (NNDKOR).

10. Procédé selon l'une des revendications 1 à 9, **caractérisé en ce que** la différence des vitesses de rotation des roues corrigée normée (NND) est traitée, pour le calcul de la valeur de l'accélération transversale (AQ), dans la fonction suivante :

$$AQ = NRA\_M34 * NRA\_M34 * NND / AQFAKT$$

où "AQ" représente la valeur de l'accélération transversale, "NRA_M34" représente la vitesse de rotation moyenne des roues, "NND" représente la différence des vitesses de rotation des roues normée et "AQFAKT" représente un facteur pour le calcul de l'accélération transversale.

11. Procédé selon la revendication 10, **caractérisé en ce que** le facteur pour le calcul de l'accélération transversale (AQFAKT) est obtenu selon la fonction

$$AQFAKT = SB * 3600 / (4*Pi^2*RDYN^2)$$

où "AQFAKT" représente le facteur pour le calcul de l'accélération transversale, "SB" représente la voie et "RDYN" représente le rayon dynamique des pneumatiques.

12. Procédé selon l'une des revendications 1 à 11, **caractérisé en ce que** la valeur de l'accélération transversale (AQ) est mise à zéro lorsque la vitesse de rotation moyenne des roues (NRA_M34) se trouve en dehors d'un intervalle défini par une valeur limite minimale (NRAMIN) et une valeur limite maximale (NRAMAX), la différence des vitesses de rotation des roues normée (NNDO) est supérieure à une valeur maximale préalablement définie (NNDMAX) ou la valeur de l'accélération transversale calculée (AQ) est inférieure à zéro.

13. Procédé selon l'une des revendications 1 à 12, **caractérisé en ce que**, comme condition de départ, on vérifie si un commutateur d'application pour la compensation des tolérances sur les vitesses de rotation de roues est activé (SWI = 1).

14. Procédé selon l'une des revendications 1 à 13, **caractérisé en ce que** la valeur de l'accélération transversale (AQ) est calculée alors que le commutateur d'application pour la compensation des tolérances sur les vitesses de rotation de roues n'est pas activé (SWI = 0), selon la fonction

$$AQ = (NRA\_M34 * NRA\_D34) / AQFAKT$$

où "AQ" représente la valeur de l'accélération transversale, "NRA_M34" représente la vitesse de rotation moyenne des roues et "AQFAKT" représente un facteur pour le calcul de l'accélération transversale.

15. Procédé selon l'une des revendications 1 à 14, **caractérisé en ce que** le rayon dynamique des pneumatiques (RDYN) est obtenu pour une roue qui roule sans glissement pendant la marche.

16. Procédé selon l'une des revendications 1 à 15, **caractérisé en ce que**, comme vitesses de rotation des roues (NRA3, NRA4), on utilise les vitesses de rotation des roues non motrices du véhicule.

17. Procédé selon l'une des revendications 1 à 16, **caractérisé en ce que** la valeur de l'accélération transversale (AQ) obtenue avec le module de compensation des tolérances sur les roues (M1) est utilisée comme grandeur d'entrée dans un module de programme destiné à la détection d'une conduite en courbe, où une conduite en courbe est détectée lorsque la valeur de l'accélération transversale obtenue (AQ) devient supérieure à une courbe caractéristique (AQKURVE) qui est fixée en fonction de valeurs de l'accélération transversale (AQ) et de grandeurs proportionnelles à une activité du conducteur.

18. Procédé selon la revendication 17, **caractérisé en ce que** la courbe caractéristique (AQKURVE) présente de l'hystérésis.

**19.** Procédé selon la revendication 17 ou 18, **caractérisé en ce qu'**un trajet de sécurité (WEG) est majoré d'un trajet fonction de la vitesse de rotation de sortie (WEGKV) lorsque la valeur de l'accélération transversale (AQ) a de nouveau franchi la courbe caractéristique (AQKURVE) dans le sens descendant après la détection d'une conduite en courbe, une conduite en courbe n'étant plus supposée existante lorsque la courbe caractéristique (AQKURVE) n'est pas de nouveau franchie dans le sens ascendant dans les limites d'un trajet de sécurité (WEG) et le trajet de sécurité (WEG) est de nouveau majoré du trajet fonction de la vitesse de rotation de sortie (WEGKV) lorsque la courbe caractéristique (AQKURVE) est de nouveau franchie dans le sens ascendant dans les limites du trajet de sécurité (WEG).

**20.** Procédé selon l'une des revendications 17 à 19, **caractérisé en ce qu'**une interdiction de changement de rapport en montée est déclenchée en cas de détection d'une conduite en courbe.

Start

F1
SWI = 1

nein → **F2**
AQ = NRA_M34*NRA_D34/AQFAKT

ja

**F3**
NNDO = NRA_D34/NRA_M34

nein **F4**
NND = NNDO - NNDF + NNDKOR

**F5**
$AQ = NRA\_M34^2 * NND / AQFAKT$

**M1**

F6
AQ < 0

ja → **F7**
AQ = 0

nein

Ausgabe AQ

**Fig. 1**

M2

NNDO

S1

NNDO > NNDMAX — ja → Abbruch  S2

nein

S3

Bremse = 1
oder
Schaltung = 1
oder
Radschlupf = 1
oder
ABS = 1
oder
ASC = 1
oder
FDR = 1

ja → Abbruch  S4

nein  S5

NNDF = (B*NNDO+(65535-B)*NNDF) / 65536

Ausgabe NNDF

**Fig. 2**